# EUROPÄISCHE PATENTANMELDUNG

(11) **EP 1 388 956 A1**
(43) Veröffentlichungstag der Anmeldung: **11.02.2004**
(21) Anmeldenummer: 02017921.4
(22) Anmeldetag: 09.08.2002
(51) Int. Cl.: H04B 7/005

(54) **Verfahren zur Regelung der Sendeleistung einer sendenden Station sowie sendende Station und Funksystem.**

(71) Anmelder: SIEMENS AKTIENGESELLSCHAFT, 80333 München (DE)
(72) Erfinder: Gustrau, Joerg, 10625 Berlin (DE); Höynck, Andreas, 16540 Hohen Neuendorf (DE); Schniedenharn, Joerg, 13587 Berlin (DE); Schwagmann, Norbert, 38102 Braunschweig (DE); Vesely, Alexander, 1170 Wien (AT)

(57) **Zusammenfassung**

Die Erfindung betrifft ein Verfahren zur Regelung der Sendeleistung einer sendenden Station sowie eine entsprechende sendende Station und ein entsprechendes Funksystem. In dem erfindungsgemäßen Verfahren zur Regelung der Sendeleistung (SL) einer sendenden Station (BS) übermittelt die sendende Station Signale (MC) über eine Luftschnittstelle an eine empfangende Station (MS1). Die empfangende Station (MS1) bestimmt einen Wert (Q1) der Empfangsqualität für die empfangenen Signale (MC) und vergleicht den Wert (Q1) der Empfangsqualität mit einem Sollwert (SW). Die empfangende Station (MS1) überträgt daraufhin eine Qualitätsinformation (QI1) über die empfangenen Signale (MC) nur dann an die sendende Station (BS), falls der Wert (Q1) der Empfangsqualität schlechter als der Sollwert (SW) ist. Die Sendeleistung (SL) der sendenden Station (BS) wird dann anhand der von der empfangenden Station (MS1) übertragenen Qualitätsinformation (QI1) eingestellt wird.

## Beschreibung

Die Erfindung betrifft ein Verfahren zur Regelung der Sendeleistung einer sendenden Station sowie eine entsprechende sendende Station und ein entsprechendes Funksystem.

In der 3GPP (3^{rd} Generation Partnership Program) werden momentan Verfahren spezifiziert, um die gleichen Daten an viele Benutzer zu senden. Diese Arbeit in der Standardisierung wird unter dem Begriff Multimedia Broadcast Multicast Service (MBMS) bearbeitet.

Broadcast-Signale sind Signale, die von einer sendenden Station an alle Stationen übertragen werden, die sich in Funkreichweite der sendenden Station befinden. Die sendende Station überträgt Daten, die von allen erreichbaren Stationen genutzt werden sollen. Hierzu gehören beispielsweise Informationen über zu verwendende Spreizcodes in einer Funkzelle eines zellularen Funksystems mit CDMA-Multiplex-Komponente (CDMA: Code Division Multiple Access) oder über die Sendeleistung, die von Mobilstationen zu wählen ist.

Multicast-Signale hingegen werden von einer sendenden Station an alle Stationen einer vor der Signalübertragung festzulegenden Multicast-Gruppe gleichzeitig übertragen. Die so übertragenen Daten werden nur von einer bestimmten Gruppe der erreichbaren Stationen benötigt. Beispielsweise können mit Multicast-Signale gezielt ausgewählte Stationen mit neuer Software versorgt werden (software download).

Die per Broadcast oder Multicast übertragenen Daten können sowohl Nutz- als auch Signalisierungsdaten enthalten.

Eine effiziente Verwendung von Übertragungsressourcen stellt bei der Übertragung von Multicast- und Broadcast-Signalen ein essentielles Problem dar. So ist beispielsweise beim UMTS (Universal Mobile Telecommunications System), das Spreizcodes verwendet, die Sendeleistung, mit der eine Basisstation in einer Zelle ausstrahlen kann, eine wichtige und knappe Ressource.

Auch für Daten, die an viele Teilnehmer gesendet werden, d.h. bei Punkt-zu-Mehrpunkt-Verbindungen (Broadcast, Multicast), ist es von großer Bedeutung, eine möglichst geringe Sendeleistung zu verwenden.

In der EP 1 143 635 A1 ist ein Verfahren zur Kontrolle der Sendeleistung einer Basisstation beschrieben, die ein Multicast-Signal an eine Vielzahl von Mobilstationen aussendet. Die Mobilstationen bestimmen einen Qualitätsparameter des Signals und übertragen diesen an die Basisstation über eine Funkverbindung. Aus den Qualitätsparametern aller Mobilstationen bestimmt die Basisstation einen Leistungskontrollwert, der die Sendeleistung des Multicast-Signals kontrolliert.

Der Erfindung liegt die Aufgabe zugrunde, ein verbessertes Verfahren anzugeben, mit dem die Sendeleistung einer sendenden Station geregelt werden kann.

Diese Aufgabe wird mit dem Verfahren mit den Merkmalen gemäß Anspruch 1, der empfangenden Station nach Anspruch 9 und dem Funksystem nach Anspruch 10 gelöst.

Vorteilhafte Aus- und Weiterbildungen der Erfindung sind Gegenstand der abhängigen Ansprüche.

In dem erfindungsgemäßen Verfahren zur Regelung der Sendeleistung einer sendenden Station übermittelt die sendende Station Signale über eine Luftschnittstelle an eine empfangende Station. Die empfangende Station bestimmt einen Wert der Empfangsqualität für die empfangenen Signale und vergleicht den Wert der Empfangsqualität mit einem Sollwert. Die empfangende Station überträgt daraufhin eine Qualitätsinformation über die empfangenen Signale nur dann an die sendende Station, falls der Wert der Empfangsqualität schlechter als der Sollwert ist. Die Sendeleistung der sendenden Station wird dann anhand der von der empfangenden Station übertragenen Qualitätsinformation eingestellt. Die Sendeleistung der sendenden Station wird auf diese Weise nur dann neu eingestellt, wenn die von der empfangenden Station empfangene Leistung schlechter als ein gewünschter Wert ist. Der Signalisierungsaufwand wird so auf ein Minimum reduziert. Im oben genannten Stand der Technik (EP 1 143 635 A1) hingegen überträgt eine empfangende Station immer eine Qualitätsinformation, unabhängig davon, ob die Sendeleistung der sendenden Station ausreicht oder nicht. Beim Stand der Technik fallen daher wesentlich mehr Daten an, die von der sendenden Station verarbeitet werden müssen und Übertragungsressourcen in Aufwärtsrichtung (Uplink) werden verschwendet. Ferner wird durch das erfindungsgemäße Verfahren der Leistungsverbrauch von empfangenden Stationen im Vergleich zum Stand der Technik reduziert, da eine empfangende Station nur dann eine Qualitätsinformation an die sendende Station überträgt, wenn der Wert der Empfangsqualität der empfangenden Station schlechter als der Sollwert ist.

Vorteilhafter Weise sind die von der sendenden Station übermittelten Signale für die Übermittlung an mehrere empfangende Stationen vorgesehen und die sendende Station übermittelt die Signale über eine Luftschnittstelle an mindestens eine weitere empfangende Station. Auch die weitere empfangende Station bestimmt einen Wert der Empfangsqualität für die empfangenen Signale und vergleicht den Wert der Empfangsqualität mit einem Sollwert. Die weitere empfangende Station überträgt ebenfalls eine Qualitätsinformation über die empfangenen Signale nur dann an die sendende Station, falls der Wert der Empfangsqualität schlechter als der Sollwert ist. Die Sendeleistung der sendenden Station wird dann zusätzlich anhand der von der weiteren empfangenden Station übertragenen Qualitätsinformation eingestellt. Empfangen mehrere Stationen die Signale von der sendenden Station, wie dies bei Multicastoder Broadcast-Signalen der Fall ist, so senden nur diejenigen empfangenden Stationen eine Qualitätsinformation an die sendende Station, deren Wert der Empfangsqualität schlechter ist als ein gewünschter Sollwert. Die Sendeleistung wird daher nur anhand der Empfangsqualität der schlecht empfangenden Stationen eingestellt. Mit geringem Signalisierungsaufwand können so alle für den Empfang der Signale vorgesehenen Stationen, die die Signale der sendenden Station empfangen, mit einer ausreichenden Sendeleistung versorgt werden. Die Sendeleistung wird dann vorteilhaft in Abhängigkeit von der Qualitätsinformation der empfangenden Station mit der schlechtesten Empfangsqualität eingestellt.

Die Anzahl der bei der sendenden Station gleichzeitig eintreffenden Qualitätsinformationen, die aufgrund von Interferenzen miteinander nicht oder nur gestört empfangen werden können, lässt sich dadurch vorteilhaft reduzieren, dass diejenigen der empfangenden Stationen mit einem Wert der Empfangsqualität, der schlechter ist als der Sollwert, ihre Qualitätsinformation zumindest teilweise zu verschiedenen Zeitpunkten an die sendende Station übertragen.

Der Zeitpunkt, zu dem diejenigen der empfangenden Stationen mit einem Wert der Empfangsqualität, der schlechter ist als der Sollwert, ihre Qualitätsinformation übertragen, wird nach einer Weiterbildung der Erfindung anhand einer Identifizierungsinformation der jeweiligen empfangenden Station festgelegt. Für jede empfangende Station ist so ohne weiteren Signalisierungsbedarf von Anfang an festgelegt, wann sie eine Qualitätsinformation an die empfangende Station übertragen darf. Das Kollisionsrisiko beim Empfang der Qualitätsinformationen durch die sendende Station wird so reduziert.

Wird der Sollwert der empfangenden Station oder den empfangenden Stationen von der sendenden Station übermittelt, so hat dies den Vorteil, dass die sendende Station den Sollwert an vorhandene Übertragungsbedingungen und an die Art des zu übertragenden Signals jederzeit anpassen kann.

Die Sendeleistung der sendenden Station wird verringert, falls nach dem Empfang einer Qualitätsinformation für ein vorgegebenes Zeitintervall keine weitere Qualitätsinformation empfangen wird. Verlassen Stationen mit schlechter Empfangsqualität den Sendebereich der sendenden Station oder sind sie nicht mehr für die Übermittlung der von der sendenden Station übermittelten Signale vorgesehen oder nähern sie sich der sendenden Station, so ist es nicht mehr nötig mit der gleichen Sendeleistung weiter zu übertragen. Die Stationen, an die nach den zuvor genannten Bedingungen die Signale von der sendenden Station übermittelt werden, senden keine Qualitätsinformation, d.h. der jeweilige Wert der Empfangsleistung ist gleich oder sogar besser als der Sollwert. Daher ist es vorteilhaft, nun die Sendeleistung sukzessive zu reduzieren, bis wieder eine Qualitätsinformation empfangen wird, die die sendende Station über eine unzureichende Empfangsqualität informiert.

Gibt die Qualitätsinformation den Wert der Empfangsqualität an oder enthält sie ein Steuersignal für die Sendeleistung der sendenden Station, so kann im ersten Fall direkt aus dem Wert der Empfangsqualität ein neuer Wert für die Sendeleistung vorteilhaft bestimmt werden. Im zweiten Fall entfällt auf der sendenden Seite die Notwendigkeit Berechnungen für die Sendeleistung durchzuführen. Die Änderung wird direkt durch die betroffene empfangende Station signalisiert.

Der Signalisierungsaufwand, insbesondere die Größe der Qualitätsinformation kann praktischerweise reduziert werden, wenn die empfangende Station oder die empfangenden Stationen ihre Qualitätsinformation in einer Weise an die sendende Station übertragen, dass die sendende Station der Qualitätsinformation nicht entnehmen kann, von welcher empfangenden Station diese Qualitätsinformation übertragen wurde.

Die empfangende Station und das Funksystem sind mit den für die Durchführung des Verfahrens notwendigen Komponenten ausgestattet.

Die Erfindung wird im folgenden anhand von in den Figuren dargestellten Ausführungsbeispielen näher erläutert. Es zeigen:
- Fig. 1:: eine sendende und eine empfangende Station, die das erfindungsgemäße Verfahren durchführen,
- Fig. 2:: eine sendende und drei empfangende Stationen in einer anderen Ausführungsform der Erfindung,
- Fig. 3:: ein zeitlicher Verlauf einer Ausführungsform der Erfindung.

Im folgenden wird die Erfindung anhand von Ausführungsbeispielen in einem UMTS-Mobilfunknetz (UMTS: Universal Mobile Telecommunications System) beschrieben. Selbstverständlich ist die Erfindung auch in anderen Funksystemen wie einem GSM-Mobilfunknetz (GSM: Global System for Mobile communications) oder in drahtlosen lokalen Netzwerken (WLANs: Wireless Local Area Networks) anwendbar.

Gleiche Bezugszeichen in den Figuren bezeichnen gleiche Gegenstände.

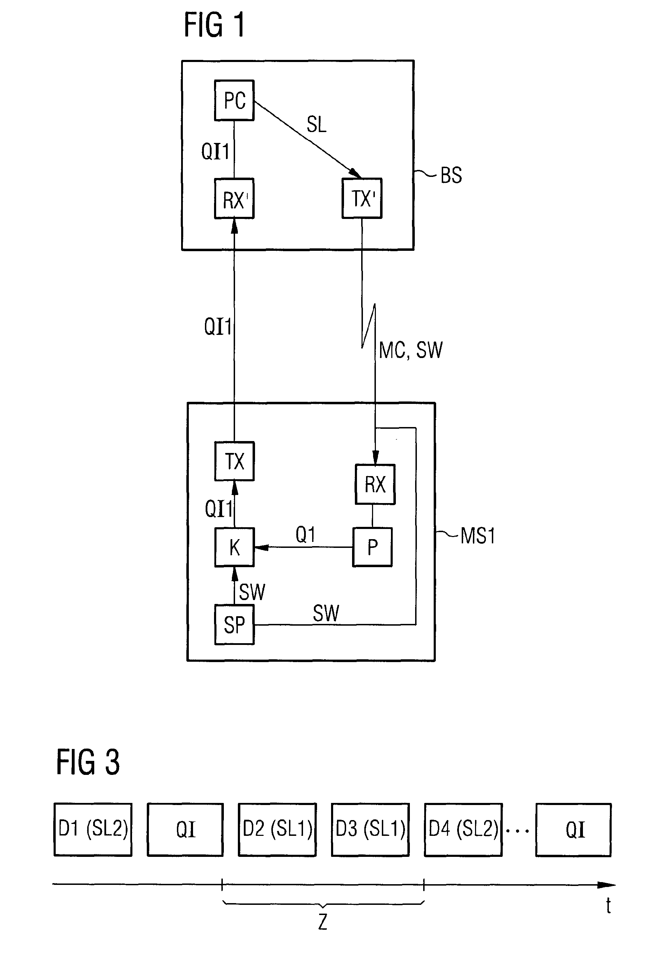

In der schematischen Darstellung in Figur 1 überträgt eine sendende Station BS Signale MC an eine empfangende Station MS1. Die empfangende Station MS1 verfügt über eine Empfangseinheit RX , die die Signale MC empfängt. In der Einheit P wird ein Wert Q1 der Empfangsqualität bestimmt. Dazu wird in diesem Ausführungsbeispiel eine Blockfehlerrate gemessen, d.h. die Anzahl fehlerhaft empfangener Datenblöcke ins Verhältnis zur Anzahl der insgesamt empfangenen Datenblöcke gesetzt. Alternativ kann auch eine beliebige Fehlerrate der übertragenen Daten oder ein Signal-zu-Interferenz-Verhältnis bestimmt werden. Der Wert Q1 der Empfangsqualität wird in einer Einrichtung K mit einem Sollwert SW verglichen. Der Sollwert wird von der sendenden Station BS an die empfangende Station übermittelt und dort in einem Speicher SP gespeichert und der Einrichtung K mitgeteilt. Ist der Wert Ql der Empfangsqualität schlechter, d.h. die Blockfehlerrate größer als der durch den Sollwert SW vorgegebene Wert, so wird eine Qualitätsinformation QI1 in der Einrichtung K generiert, die die sendende Station über die Empfangsqualität informiert. Dazu wird mittels der Qualitätsinformation QI1 der entsprechende Wert Q1 der Empfangsqualität von einer Sendeeinheit TX an eine Empfangseinheit RX' in der sendenden Station BS übertragen. In der sendenden Station wertet eine Kontrolleinheit PC die Qualitätsinformation QI1 aus und gibt der Sendeeinheit TX' der sendenden Station eine Sendeleistung SL an, mit der diese im folgenden die Signale MC überträgt.

Der Sollwert SW mit dem der Wert Q1 der Empfangsqualität verglichen wird kann im vornherein in der empfangenden Station MS1 fest gespeichert sein oder er wird von außen, insbesondere durch die sendende Station BS übermittelt. Die sendende Station BS kann in diesem Fall den Sollwert SW jederzeit an die aktuellen Bedürfnisse der Übertragung anpassen. So würde die sendende Station BS für Videodaten eine höhere Empfangsqualität verlangen als für reine Sprachdaten. Die sendende Station BS übermittelt den Sollwert SW an die empfangende Station MS1 über einen Rundruf (Broadcast) an alle erreichbaren Stationen oder sie adressiert die empfangende Station direkt (Paging). Dies gilt selbstverständlich auch für nachfolgend genannte Ausführungsformen der Erfindung.

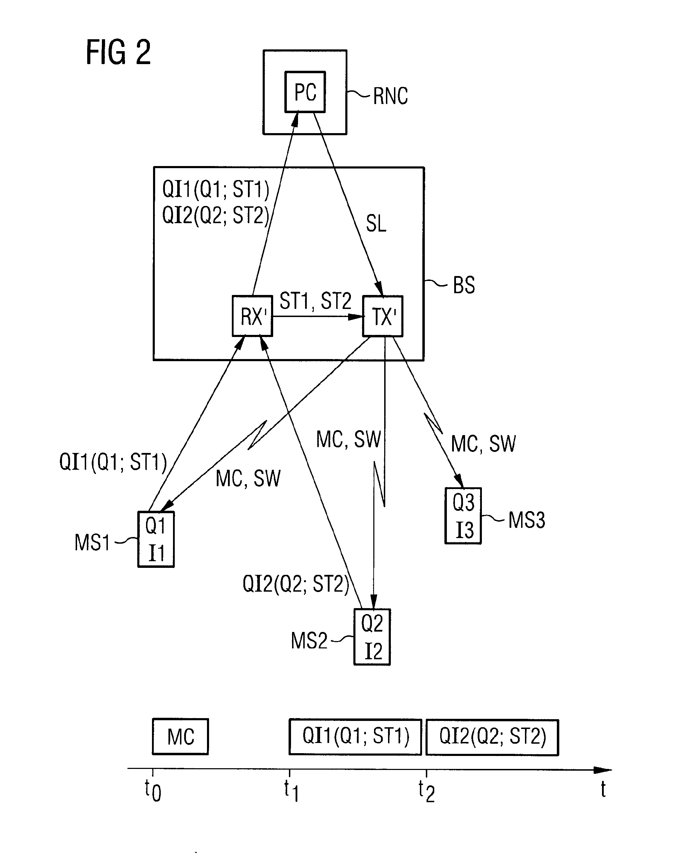

Figur 2 zeigt schematisch die Übertragung von Multicast-Signalen MC an drei empfangende Stationen MS1, MS2, MS3. Die empfangenden Stationen MS1, MS2, MS3 sind der Übersicht halber ohne die Einrichtungen aus Figur 1 dargestellt, weisen jedoch alle die gleiche Bauart auf, wie die in Figur 1 dargestellt empfangende Station MS1. Alle drei empfangenden Stationen MS1, MS2, MS3 besitzen eine Identifizierungsinformation I1 12, I3, anhand derer sie unterschieden werden können. Alle drei empfangenden Stationen MS1, MS2, MS3 ermitteln, wie schon zu Figur 1 beschrieben, einen Wert Ql, Q2, Q3 der Empfangsqualität. Nur zwei der empfangenden MS2 haben einen Wert Q1, Q2 der Empfangsqualität, der schlechter ist als ein Sollwert SW und übertragen daher jeweils eine Qualitätsinformation QI1, QI2 an die sendende Station BS. Durch die Schreibweise QI1(Q1;ST1) und QI2(Q2;ST2) ist verdeutlicht, dass die Qualitätsinformationen QI1, QI2 entweder den Wert Q1, Q2 der Empfangsqualität angeben oder ein Steuersignal ST1, ST2 zur direkten Festlegung der Sendeleistung SL enthalten kann. Sind Steuersignale ST1 oder ST2 in der Qualitätsinformation QI1, QI2 enthalten, so werden diese direkt von der Empfangseinheit RX ' der sendenden Station BS an ihre Sendeeinheit TX' weitergegeben. Die Steuersignale geben entweder den neuen Wert der Sendeleistung der sendenden Station vor oder es handelt sich um Steuerbits (TPC-Bits: Transmit-Power-Control Bits), die der Sendeeinheit anzeigen, dass die Sendeleistung um einen zuvor festgelegten Wert erniedrigt werden muss.

Ist in der Qualitätsinformation QI1, QI2 ein Wert Q1, Q2 der Empfangsqualität angegeben, so wird die Qualitätsinformation QI1, QI2 an einen Funkzugangskontroller RNC weitergeleitet. Im Funkzugangskontroller RNC wertet eine Kontrolleinheit PC die Qualitätsinformation QI1, QI2 aus und teilt der Sendeeinheit TX' der sendenden Station BS die zukünftige Sendeleistung SL mit. Dabei wird für die Berechnung der neuen Sendeleistung nur die Qualitätsinformation der empfangenden Station mit der schlechtesten Empfangsqualität verwendet.

Der Signalisierungsaufwand und somit die Belastung der Luftschnittstelle wird in erheblichem Maße reduziert, da durch die beschriebene Anwendung der Erfindung nur diejenigen empfangenden Stationen MS1, MS2 ihre Qualitätsinformation QI1, QI2 signalisieren, die tatsächlich eine höhere Sendeleistung SL benötigen. Dies wird insbesondere dann deutlich, wenn eine große Gruppe von empfangenden Stationen - mit beispielsweise 100 oder mehr empfangenden Stationen - für den Empfang von Multicast-Signalen MC vorgesehen ist.

An dieser Stelle wird noch einmal betont, dass die Kontrolleinheit PC sowohl in der sendenden Station BS (vgl. Figur 1) als auch in einer übergeordneten Station (Funkzugangskontroller RNC in Figur 2) untergebracht sein kann.

Die Zeitpunkte t1, t2 zu denen die beiden empfangenden Stationen MS1, MS2 ihre Qualitätsinformation QI1, QI2 an die sendende Station BS übertragen, wird aufgrund der jeweiligen Identifizierungsinformation I1, I2 festgelegt. Aus der Identifizierungsinformation I1 12 wird für jede empfangende Station eine Wartezeit abgeleitet, nach der die jeweilige empfangende Station ihre Qualitätsinformation QI1, QI2 überträgt. Die Qualitätsinformation QI1 wird daher zu einem Zeitpunkt t1 nach einer Wartezeit t1-t0 übertragen, während die Qualitätsinformation QI2 zum Zeitpunkt t2 nach einer Wartezeit von t2-t0 übertragen wird. Auf diese Weise wird eine Kollision der beiden Qualitätsinformationen QI1, QI2 bei der sendenden Station BS vermieden. Beispielsweise könnten Stationen mit einer geraden Identifizierungsnummer zum Zeitpunkt t1 übertragen, während Stationen mit einer ungeraden Identifizierungsnummer zum Zeitpunkt t2 senden. Dadurch werden zwar nicht immer alle Kollisionen vermieden, aber zumindest die Wahrscheinlichkeit für Kollisionen reduziert. Eine weitere Variante könnte für jede Endziffer der Identifizierungsinformation unterschiedliche Wartezeiten festlegen und so die Wahrscheinlichkeit einer Kollision weiter reduzieren. Beliebig komplizierte Zuweisungsvorschriften können hier verwendet werden.

Um sicherzustellen, dass die Sendeleistung auch wieder reduziert wird, falls sich die Empfangsqualität der empfangenden Stationen verbessert oder empfangende Stationen mit der schlechtesten Empfangsqualität nicht mehr mit Multicast-Signalen versorgt werden, wird nach Erhalt einer Qualitätsinformation ein Zähler gestartet an dem die seit Erhalt der Qualitätsinformation verstrichene Zeit abgelesen werden kann. Dieser Zähler sitzt entweder im Funkzugangskontroller RNC oder in der sendenden Station BS. Wird für eine vorgegebenes Zeitintervall kein weitere Qualitätsinformation empfangen, so wird für die Sendeeinheit eine geringere Sendeleistung festgelegt. Dies ist in Figur 3 schematisch dargestellt. Von einem Multicast-Signal, das sich aus mehreren Datenpaketen zusammensetzen kann, wird zunächst ein erstes Datenpaket D1 mit einer Sendeleistung SL2 ausgesendet und empfangen. Danach werden die zugehörigen Qualitätsinformationen QI von Mobilstationen der Teilgruppe ausgesendet und von der Basisstation empfangen. Weitere Datenpakete D2, D3 des Multicast-Signals folgen - in diesem Beispiel zwei Datenpakete D2, D3 mit höherer Sendeleistung SL1 - ohne dass weitere Qualitätsinformationen QI von der Basisstation empfangen werden. Seit den letzten empfangenen Qualitätsinformationen QI ist ein vorgegebenes Zeitintervall Z verstrichen, woraufhin automatisch für ein nachfolgendes Datenpaket D4 eine neue, geringere Sendeleistung SL2 festgelegt wird. Es gilt SL2 < SL1. Dieser Vorgang wird - mit günstig gewählten Leistungsänderungen ΔSL=SL1-SL2 - solange wiederholt bis wieder Qualitätsinformationen QI von der Basisstation empfangen werden oder die Übertragung des Multicast-Signals beendet wurde.

## Patentansprüche

1. Verfahren zur Regelung der Sendeleistung einer sendenden Station (BS), bei dem
- die sendende Station (BS) Signale (MC) (über eine Luftschnittstelle an eine empfangende Station (MS1) übermittelt,
- die empfangende Station (MS1) einen Wert der Empfangsqualität (Q1 für die empfangenen Signale (MC) bestimmt,
- der Wert (Q1 der Empfangsqualität mit einem Sollwert (SW) verglichen wird,
- die empfangende Station (MS1 eine Qualitätsinformation (QI1) über die empfangenen Signale (MC) nur dann an die sendende Station (BS) überträgt, falls der Wert (Q1 der Empfangsqualität schlechter als der Sollwert (SW) ist
- und die Sendeleistung (SL) der sendenden Station (BS) anhand der von der empfangenden Station (MS1) übertragenen Qualitätsinformation (QI1) eingestellt wird.

2. Verfahren nach Anspruch 1, bei dem
- die von der sendenden Station (BS) übermittelten Signale (MC) für die Übermittlung an mehrere empfangende Stationen (MS1, MS2, MS3) vorgesehen sind,
- die sendende Station (BS) die Signale (MC) über eine Luftschnittstelle an mindestens eine weitere empfangende Station (MS2) übermittelt,
- die weitere empfangende Station (MS2) einen Wert (Q2) der Empfangsqualität für die empfangenen Signale (MC) bestimmt,
- der Wert (Q2) der Empfangsqualität mit einem Sollwert verglichen wird,
- die weitere empfangende Station (MS2) eine Qualitätsinformation (QI2) über die empfangenen Signale (MC) nur dann an die sendende Station (BS) überträgt, falls der Wert (Q2) der Empfangsqualität schlechter als der Sollwert (SW) ist
- und die Sendeleistung (SL) der sendenden Station (BS) zusätzlich anhand der von der weiteren empfangenden Station (MS2) übertragenen Qualitätsinformation (QI2) eingestellt wird.

3. Verfahren nach Anspruch 2, bei dem diejenigen der empfangenden Stationen (MS1, MS2, MS3) mit einem Wert (Q1, Q2, Q3) der Empfangsqualität, der schlechter ist als der Sollwert (SW), ihre Qualitätsinformation (QI1, QI2) zumindest teilweise zu verschiedenen Zeitpunkten (t1, t2) man die sendende Station (BS) übertragen.

4. Verfahren nach Anspruch 3, bei dem der Zeitpunkt (t1, t2), zu dem diejenigen der empfangenden Stationen (MS1, MS2, MS3) mit einem Wert (Q1, Q2, Q3) der Empfangsqualität, der schlechter ist als der Sollwert (SW), ihre Qualitätsinformation (QI1, QI2) übertragen, anhand einer Identifizierungsinformation (I1 I2) der jeweiligen empfangenden Station (MS1, MS2) festgelegt wird.

5. Verfahren nach einem der vorstehenden Ansprüche, bei dem der Sollwert (SW) der empfangenden Station (MS1) oder den empfangenden Stationen (MS1, MS2, MS3) von der sendenden Station (BS) übermittelt wird.

6. Verfahren nach einem der vorstehenden Ansprüche, bei dem die Sendeleistung (SL1, SL2; SL) der sendenden Station (BS) verringert wird, falls nach dem Empfang einer Qualitätsinformation (QI; QI1, QI2) für eine vorgegebenes Zeitintervall (Z) keine weitere Qualitätsinformation (QI; QI1, QI2) empfangen wird.

7. Verfahren nach einem der vorstehenden Ansprüche, bei dem die Qualitätsinformation (QI; QI1, QI2) den Wert (Q1, Q2) der Empfangsqualität angibt oder ein Steuersignal (ST1, ST2) für die Sendeleistung (SL1, SL2; SL) der sendenden Station (BS) enthält.

8. Verfahren nach einem der vorstehenden Ansprüche, bei dem die empfangende Station (MS1) oder die empfangenden Stationen (MS1, MS2) ihre Qualitätsinformation (QI1, QI2) in einer Weise an die sendende Station (BS) übertragen, dass die sendende Station (BS) der Qualitätsinformation (QI1, QI2) nicht entnehmen kann, von welcher empfangenden Station (MS1, MS2) diese Qualitätsinformation (QI1, QI2) übertragen wurde.

9. Empfangende Station (MS1, MS2, MS3)
- mit einer Empfangseinheit (RX) zum Empfang von Signalen (MC) von einer sendenden Station (BS),
- mit einer Einrichtung (P) zur Bestimmung eines Werts (Q1, Q2, Q3) der Empfangsqualität der empfangenen Signale (MC),
- mit einer Einrichtung (K) zum Vergleich des Werts (Q1, Q2, Q3) der Empfangsqualität mit einem Sollwert (SW) ,
- mit einer Sendeeinheit (TX) zur Übertragung einer Qualitätsinformation (QI; QI1, QI2) über die empfangenen Signale (MC) an die sendende Station (BS), wobei die Einrichtung (TX) die Qualitätsinformation (QI; QI1, QI2) nur dann an die sendende Station (BS) überträgt, falls der Wert (Q1, Q2, Q3) der Empfangsqualität schlechter als der Sollwert (SW) ist.

10. Funksystem mit einer empfangenden Station (MS1, MS2, MS3) und einer sendenden Station (BS), dessen empfangende Station (MS1, MS2, MS3)
- eine Empfangseinheit (RX) zum Empfang von Signalen (MC) von einer sendenden Station,
- eine Einrichtung (P) zu Bestimmung eines Werts (Q1, Q2, Q3) der Empfangsqualität der empfangenen Signale (MC),
- eine Einrichtung (K) zum Vergleich des Werts (Ql, Q2, Q3) der Empfangsqualität mit einem Sollwert (SW),
- und eine Sendeeinheit (TX) zur Übertragung einer Qualitätsinformation (QI; QI1, QI2) über die empfangenen Signale (MC) an die sendende Station (BS) aufweist, wobei die Einrichtung (TX) die Qualitätsinformation (QI; QI1, QI2) nur dann an die sendende Station (BS) überträgt, falls der Wert (Q1, Q2, Q3) der Empfangsqualität schlechter als der Sollwert (SW) ist,
und dessen sendende Station (BS)
eine Sendeeinheit (TX) zur Übertragung von Signalen (MC) über eine Luftschnittstelle an die empfangende Station aufweist, wobei die Sendeleistung (SL1, SL2; SL) der sendenden Station (BS) anhand der von der empfangenden Station (MS1, MS2) übertragenen Qualitätsinformation (QI; QI1, QI2) eingestellt wird.
